(19) **Europäisches Patentamt**
**European Patent Office**
**Office européen des brevets**

(11) **EP 4 357 983 A1**

(12) **EUROPEAN PATENT APPLICATION**

(43) Date of publication:
**24.04.2024 Bulletin 2024/17**

(21) Application number: **23197061.7**

(22) Date of filing: **13.09.2023**

(51) International Patent Classification (IPC):
**G06N 3/084** (2023.01)   **G06N 3/098** (2023.01)
**B25B 13/00** (2006.01)   **G06N 3/045** (2023.01)

(52) Cooperative Patent Classification (CPC):
**G06N 3/084; B25B 13/00; G06N 3/045;
G06N 3/098**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.10.2022 SE 2230332**

(71) Applicant: **Atlas Copco Industrial Technique AB
105 23 Stockholm (SE)**

(72) Inventors:
• **Dan, György
  18741 Täby (SE)**
• **Ramakrishna, Raksha
  16254 Vällingby (SE)**

(74) Representative: **Atlas Copco Industrial Technique
AB
105 23 Stockholm (SE)**

(54) **ESTIMATION OF CLASS-IMBALANCE IN TRAINING DATA OF AN ITERATIVE LEARNING PROCESS**

(57)   A method for estimating class-imbalance in training data of an iterative learning process comprises transmitting a global parameter vector of the computational task and a vector of the bias terms for a current iteration round of the iterative learning process to the client entities. The method comprises receiving, per client entity and for the current global iteration round, a local model parameter vector with locally computed computational results, connection weights of the connection matrix, and an updated vector of the bias terms. The method comprises estimating the class-imbalance in the local training data per each given client entity as a function of the connection weights, the bias terms, a probability distribution is a function of the bias terms as transmitted by the server entity, the number of local iteration rounds where all locally available training data was used, and the learning rate. The method comprises performing an action for any of the client entities for which the class-imbalance is larger than a threshold.

```
┌─────────────────────────────────┐
│            S102                  │
│  Transmit global parameter vector│
└─────────────────────────────────┘
              │
              ▼
┌─────────────────────────────────┐
│            S104                  │
│  Receive local model parameter   │
│  vectors and parameters          │
└─────────────────────────────────┘
              │
              ▼
┌─────────────────────────────────┐
│            S106                  │
│      Estimate class-imbalance    │
└─────────────────────────────────┘
              │
              ▼
┌─────────────────────────────────┐
│            S108                  │
│   Perform action for client entity│
└─────────────────────────────────┘
```

Fig. 3

EP 4 357 983 A1

**Description**

**TECHNICAL FIELD**

Embodiments presented herein relate to a method, a server entity, a computer program, and a computer program product for estimating class-imbalance in training data of an iterative learning process.

**BACKGROUND**

In industrial applications, various types of tools are utilized for facilitating and aiding work. For instance, automated tightening tools are employed for tightening structural joints using fasteners such as, e.g., bolts and nuts or screws. In such an environment, these tools are an absolute necessity for providing sufficiently high quality and tightening force in the tightening process. When tightening a joint, it is crucial to control the tightening operation provided by the tool. This may be undertaken in many ways, e.g., with torque control, angle control, or by measuring the elongation of the bolt during the tightening process, also known as clamp force control. An issue occurring during the tightening process is that there are several undesired tightening results that may occur for the bolt or screw being tightened, such as, e.g., a bolt being incorrectly tightened resulting in a slightly too great or slightly too small clamp force at the joint. This issue occurs both upon an operator manually handling the tightening tool as well as in applications where the tightening process is fully automated.

One way to address this issue is to use machine learning for solving a computational task pertaining to finding a preferred ultrasonic frequency to use when measuring a clamp force applied by the tightening tool to a fastener for tightening a joint, or pertaining to identifying tightening errors by analyzing the trace data resulting from tightenings of the tool. One approach to solve a computational task using machine learning involves federated learning. In general terms, federated learning is a technique to train a classifier in a distributed manner, where there are multiple clients that have their own training data and a server that orchestrates the classifier training process. In the preset context, one client can be associated by, part of, or integrated with, each tool. In this way, federated learning can be used for developing machine learning products (e.g., trace analytics for diagnosing tightening errors) where raw data as used for the training can be kept at each individual client, and thus not shared with the server.

In further detail, federated learning is a form of distributed machine learning where during the training process, an aggregator, henceforth denoted server, collects model parameter or gradient updates from clients, computes an aggregated value and sends the updated model parameters to the clients. This process is carried out until convergence, i.e., until the value of the model parameters does not change. In the end, a trained machine learning model is available for use-both to the server and to the clients. In federated learning, the training data used to update model parameters remains local and private to each of the clients, as is common in distributed learning.

One issue that might occur during any training procedure, and thus also as part of performing federated learning, is class imbalance, i.e., clients having vastly different composition of training data, which is prevalent in classification tasks. In general terms, class imbalance refers to skewed class-label distribution in training data. For example, assume that the goal is to design a classifier to distinguish between anomalous and non-anomalous data. To do so, a supervised learning method is used to train the classifier. However, if the distribution of the training data is skewed, i.e., where a comparatively large number of samples belongs to the non-anomalous class and whereas only comparatively few samples belong to the anomalous class, then the classifier cannot be trained well, unless further adjustments are made to the training process. However, when the training is part of a federated learning process, the server does not have access to the training data used by the individual clients. In other words, the server may not have direct knowledge of the class-label distribution since the training data is private to each client and might not even be revealed by the client even if requested by the server. Hence, this means that the server may not even be aware of potential class-imbalance. The fact that the server has no knowledge of the class imbalance can be approached from at least two perspectives. On the one hand, from a performance stand-point, class-imbalance is known to negatively affect the classification accuracy of the trained model, therefore detecting and mitigating it is important for training accurate models using federated learning. On the other hand, from the adversarial perspective, the composition of the clients' training data could be sensitive information that the clients do not want to reveal.

Class-label distribution inference has in the state-of-the-art been proposed to address issues of class-imbalance in federated learning. One example is provided in the article by Wang, Lixu, et al. entitled "Addressing Class Imbalance in Federated Learning", in Proceedings of the AAAI Conference on Artificial Intelligence, Vol. 35, No. 11, 2021. Another approach as suggested in the state-of-the-art is for the server to estimate the class-imbalance for each client. The latter may be regarded as privacy invasive since the server estimates the distribution of the training data at each client device in order to estimate the class-imbalance. For both these approaches, class-label distribution estimation is an intermediate step. Some approaches assume that this information is already available.

## SUMMARY

An object of embodiments herein is to address the above issues. These issues are addressed by providing techniques for efficient estimation of class-imbalance in training data of an iterative learning process that does not rely on the actual training data used by each client.

According to a first aspect there is presented a method for estimating class-imbalance in training data of an iterative learning process. The method is performed by a server entity. The iterative learning process pertains to a computational task to be performed by client entities, the computational task involving the client entities to participate in training a machine learning model. The machine learning model per each global iteration round is trained during a number of local iteration rounds at a learning rate and using a neural network having a fully-connected output layer that is associated with a connection matrix and bias terms. The method comprises transmitting a global parameter vector of the computational task and a vector of the bias terms for a current iteration round of the iterative learning process to the client entities. The method comprises receiving, per client entity and for the current global iteration round, a local model parameter vector with locally computed computational results, connection weights of the connection matrix, and an updated vector of the bias terms. The locally computed computational results are updates of the machine learning model and are computed based on the global parameter vector and the training data as locally available per said client entity. The method comprises estimating the class-imbalance in the local training data per each given client entity as a function of the connection weights, the bias terms, a probability distribution is a function of the bias terms as transmitted by the server entity, the number of local iteration rounds where all locally available training data was used, and the learning rate. The method comprises performing an action for any of the client entities for which the class-imbalance is larger than a threshold.

According to a second aspect there is presented a server entity for estimating class-imbalance in training data of an iterative learning process. The iterative learning process pertains to a computational task to be performed by client entities, the computational task involving the client entities to participate in training a machine learning model. The machine learning model per each global iteration round is trained during a number of local iteration rounds at a learning rate and using a neural network having a fully-connected output layer that is associated with a connection matrix and bias terms. The server entity comprises processing circuitry. The processing circuitry is configured to cause the server entity to transmit a global parameter vector of the computational task and a vector of the bias terms for a current iteration round of the iterative learning process to the client entities. The processing circuitry is configured to cause the server entity to receive, per client entity and for the current global iteration round, a local model parameter vector with locally computed computational results, connection weights of the connection matrix, and an updated vector of the bias terms. The locally computed computational results are updates of the machine learning model and are computed based on the global parameter vector and the training data as locally available per said client entity. The processing circuitry is configured to cause the server entity to estimate the class-imbalance in the local training data per each given client entity as a function of the connection weights, the bias terms, a probability distribution is a function of the bias terms as transmitted by the server entity, the number of local iteration rounds where all locally available training data was used, and the learning rate.

The processing circuitry is configured to cause the server entity to perform an action for any of the client entities for which the class-imbalance is larger than a threshold.

According to a third aspect there is presented a computer program for estimating class-imbalance in training data of an iterative learning process, the computer program comprising computer program code which, when run on a server entity, causes the server entity to perform a method according to the first aspect.

According to a fourth aspect there is presented a computer program product comprising a computer program according to the third aspect and a computer readable storage medium on which the computer program is stored. The computer readable storage medium could be a non-transitory computer readable storage medium.

Advantageously, these aspects provide efficient estimation of class-imbalance in training data of an iterative learning process.

Advantageously, these aspects enable the class label distribution of the training data for each of the client entities to be estimated, without violating the privacy of the client entities.

Advantageously, these aspects can, under certain conditions, provide the exact class label distribution of the training data for each of the client entities.

Advantageously, these aspects can, under all circumstances, provide an approximation of the class label distribution of the training data for each of the client entities.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 schematically illustrates an industrial tool in the form of a tightening tool, for which tool embodiments may be implemented;

Fig. 2 schematically illustrates a system where client entities participate in a federated learning process with a server entity according to embodiments:

Figs. 3 and 5 are flowcharts of methods according to embodiments;

Fig. 4 schematically illustrates a neural network according to an embodiment;

Fig. 6 illustrates results according to embodiments;

Fig. 7 is a schematic diagram showing functional units of a server entity according to an embodiment;

Fig. 8 shows one example of a computer program product comprising computer readable storage medium according to an embodiment.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

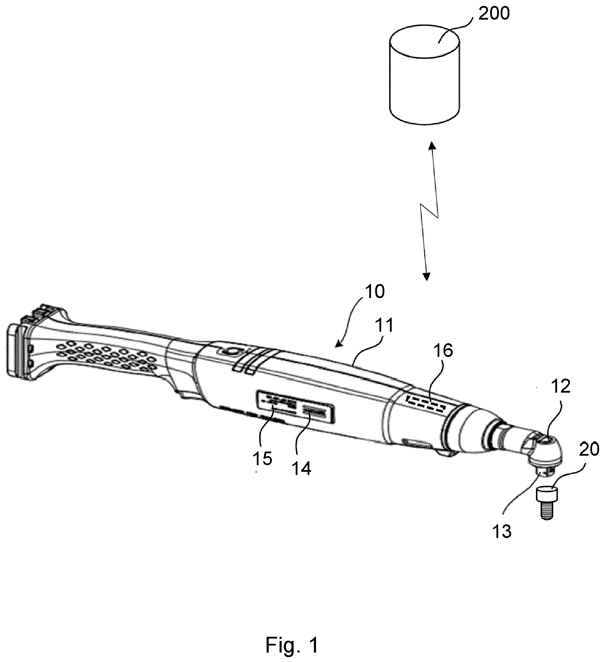

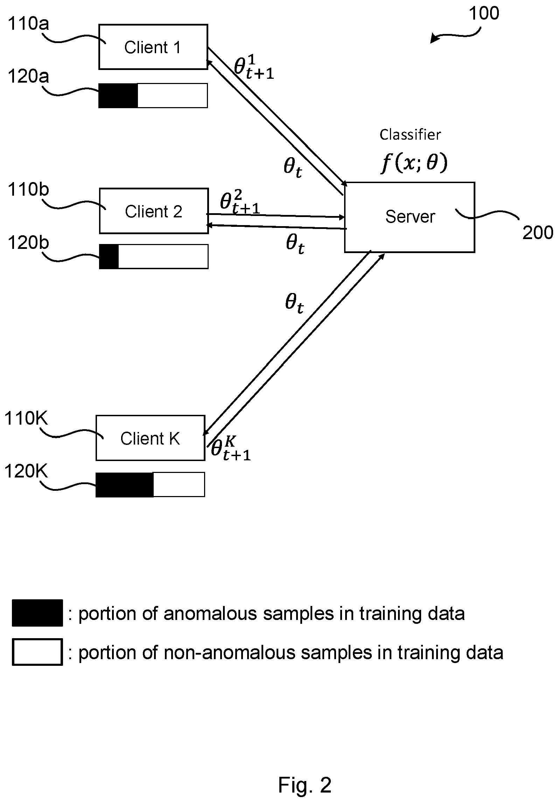

**Fig. 1** illustrates an industrial tool in the form of a tightening tool 10 configured to apply a torque to a fastener such as a bolt 20 for tightening a joint, for which tool embodiments may be implemented. The tightening tool 10 may be cordless or electrically powered via a cord and has a main body 11 and a tool head 12. The tool head 12 has an output shaft 13 on which a socket (not shown) can be attached. The output shaft 13 is configured to be rotatably driven by an electric motor arranged inside the main body 11 to apply the torque to the bolt 20 (via the socket). The tightening tool 10 may be arranged with a display 14 via which an operator of the tool 10 may be presented with information relating to operation of the tool 10, and an interface 15 via which the operator may input data to the tool 10. The tightening tool 10 implements a client entity 110k that, using a communicating capability in the form of a radio transmitter/receiver 16, is enabled to exchange information with a remotely located server entity 200; further aspects of the client entity 110k will be disclosed below, e.g., with reference to Fig. 2. In this way, the tool 10 may for instance communicate measured operational data to the server entity 200 for further evaluation, whilst the server entity 200 e.g., may send operational settings to be applied by the tool 10 or instructions to be displayed to the operator via the display 14. In this example, one client entity 110k is thus associated with one tool (such as a tightening tool 10). However, in other examples, one and the same client entity 110k might be associated with two or more tools, such as all tools associated with a specific manufacturing step, or even all tools, or pieces of industrial equipment, at a production plant, power plant, process plant, or other type of industrial facility.

As previously mentioned, when using a tightening tool 10 it is important that the resulting clamp force, i.e., the force that holds a bolted joint together, is accurate. Another example pertains to identifying different types of tightening errors by analysis of trace data (such as torque/angle data). Another example pertains to identifying a preferred ultrasonic frequency to use for measuring the clamp force of a tightening. The client entity 110k might therefore participate in a federated learning process with the server entity 200. This is further illustrated in Fig. 2. **Fig. 2** schematically illustrates a system 100 where K client entity entities 110a, 110b, ..., 110K participate in a federated learning process with a server entity 200. In some examples, the system 100 represents a distributed computing architecture. Hence, in some examples, the server entity 200 and the client entity entities 110a:110K are provided in a distributed computing architecture.

Consider a classification problem in a federated learning scenario. The task of the classifier given an input or

feature $\mathbf{x} \in \mathbb{R}^D$ is to identify the most suitable class for the input amongst C classes. Let the output of the classifier be a vector of length C denoted by $\mathbf{y}$, where each entry $[\mathbf{y}]_c$ is the probability that the input belongs to a particular class $c$, $c = 1,2, \ldots C$, i.e.,

$$\sum_c [\mathbf{y}]_c = 1.$$

Therefore, the classifier output $\mathbf{y}$ lies in the probability simplex $\Delta^{C-1}$, i.e., $\mathbf{y} \in \Delta^{C-1}$, also called the the $C$ - 1 unit simplex. The classifier is modeled as a function

$$\mathbf{f}: \mathbb{R}^D \to \Delta^{C-1}$$

parameterized by vector $\theta$. Then, the output of the classifier is

$$\mathbf{y} = \mathbf{f}(\mathbf{x}; \theta).$$

The classifier $\mathbf{f}$ described above is trained in an iterative manner. The client entities are indexed by $k \in \{1,2, \ldots, K\}$. The training data for client entity $k$ consists of $N_k$ training samples and is denoted by the set

$$\mathcal{D}_k \triangleq \left\{ \mathbf{x}_i^k, \mathbf{e}_i^k \right\}, i = 1,2, \ldots N_k,$$

where $\mathbf{x}_i^k$ is the feature or input vector and $\mathbf{e}_i^k \in \{0,1\}^C$ is the class-label that is a one-hot vector so that the entry corresponding to class c is 1 and the rest are zero. Let $N_{c,k}$ the number of training samples in dataset $\mathcal{D}_k$ of client entity $k$ with class-label $c$. Then, the class-label distribution of the training data of client entity $k$ is defined as

$$\mathbf{p}_k = \frac{1}{N_k} \sum_{i=1}^{N_k} \mathbf{e}_i^k \in \Delta^{C-1}, i.e., \quad [\mathbf{p}_k]_c \triangleq \frac{N_{c,k}}{\sum_{c=1}^{C} N_{c,k}}, \qquad (1)$$

The loss function for training is assumed to be the cross entropy for each client entity in the federated learning setup. Therefore, the optimization problem can be formulated as

$$\min_{\theta} \mathcal{L}(\theta) \text{ where } \mathcal{L}(\theta) = \sum_{k=1}^{K} \mu_k \mathcal{L}_k(\theta), \qquad (2)$$

and

$$\mathcal{L}_k(\theta) = -\frac{1}{N_k} \sum_{i=1}^{N_k} \sum_{c=1}^{C} [\mathbf{e}_i^k]_c \log\left( [\mathbf{f}(\mathbf{x}_i^k; \theta)]_c \right) \qquad (3)$$

Here $\mu_k > 0$, $\Sigma_k \mu_k = 1$. There are many approaches to solving the problem in (2). Broadly, at communication round, or global iteration round, $t + 1$, each client entity obtains the classifier parameter $\theta^t$ from the server entity, and locally updates the classifier parameter using its training data in one or more local iteration rounds by using a machine learning model. Denote by $\theta_k^{t+1}$ the locally updated parameter. Then, the one step update of client entity $k$ in round $t + 1$ is

$$\theta_k^{t+1} \leftarrow \theta_k^t - \eta \nabla \mathcal{L}_k(\theta^t) \qquad (4).$$

The above local update can be repeated a number of times, called epochs E, each time on small batches of training data of size $B$ from $\mathcal{D}_k$ . The process in (4) is called stochastic gradient descent (SGD). The server entity aggregates the local classifier parameter estimates to form the global parameter estimate in round t + 1 as

$$\theta^{t+1} \leftarrow \sum_{k=1}^{K} \mu_k \, \theta_k^{t+1}. \qquad (5)$$

The weights $\mu_k$ capture the importance of each client entity's update in the global parameter update. In the literature, common choices are $\mu_k = \frac{1}{K} \text{ or } \mu_k = \frac{N_k}{\sum_k N_k}$ .

With continued reference to Fig. 2, along each client entity 110a:110K is at reference numerals 120a, 120b, ..., 120K schematically illustrated the distribution of samples each client entity 110a:110K has access to for training an internal machine learning model. Each client entity 110a:110K might have access to different amounts of samples with a different distribution between anomalous samples marked by black and non-anomalous samples marked by white to be used as training data. Ideally, the training data should be balanced, with equally many anomalous samples and non-anomalous samples. However, the training data at one or more of the client entity entities 110a:110K could be imbalanced. For example, in the illustrative example of Fig. 2, at least client entity 110b can be regarded to have class-imbalance; the proportion of samples labeled anomalous is very small compared to the proportion of samples labeled non-anomalous.

The server entity 200 should understand the level of class-imbalance pertaining to each client entity 110a:110K, but without accessing the actual training data used by each client entity 110a:110K, and without each client entity 110a:110K providing such information to the server entity 200. According to at least some of the herein disclosed embodiments, this is achieved by the server entity 200 estimating the class-label distribution.

In further detail, at least some of the herein disclosed embodiments are based on estimating the proportion of training data belonging to different classes, for example, the proportion of anomalous versus non-anomalous bolt tightening traces in the training data at each of the client entity entities 110a:110K. This is achieved without accessing the actual training data used by each client entity 110a:110K, and without estimating the actual distribution of the training data used by each client entity 110a:110K.

The embodiments disclosed herein in particular relate to techniques for estimating class-imbalance in training data of an iterative learning process. In order to obtain such techniques there is provided a server entity 200, a method performed by the server entity 200, a computer program product comprising code, for example in the form of a computer program, that when run on a server entity 200, causes the server entity 200 to perform the method. Accordingly, the class-imbalance in training data of a certain client entity given the parameter updates while learning a multi-class machine learning classifier with C classes in the federated learning setting can be estimated. It is assumed that the server entity is aware of some parameters based on which the training at the client entities is made. Which these parameters are will be disclosed below. If all conditions of these parameters are fulfilled, then the exact value of the class label distribution can be obtained with zero error. Further, different embodiments where an approximation of the class label distribution is estimated are also disclosed for the cases where at least one of the conditions is not fulfilled. For this purpose, the server entity also needs to have access to some auxiliary data to infer the class-label distribution. Examples of this auxiliary data will be disclosed below.

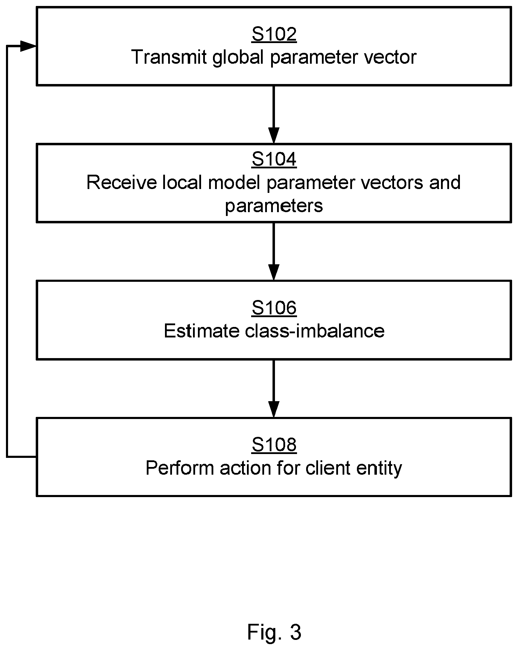

Fig. 3 is a flowchart illustrating embodiments of methods for estimating class-imbalance in training data of an iterative learning process. The methods are performed by the server entity 200. The methods are advantageously provided as computer programs 820. The iterative learning process pertains to a computational task to be performed by client entity entities 110a:110K. Each of the client entity entities 110a:110K might be provided in a respective tightening tool 10. The computational task involves the client entity entities 110a:110K to participate in training a machine learning model. The computational task might pertain to finding a preferred ultrasonic frequency to use when measuring a clamp force applied by the tightening tool 10 to a fastener for tightening a joint. Another example of a computational task may be to identify tightening errors by analyzing the trace data resulting from tightenings of the tool 10. The machine learning model per each global iteration round is trained during a number of local iteration rounds at a learning rate and using a neural network 400 having a fully-connected output layer 430 that is associated with a connection matrix and bias terms.

S102: The server entity 200 transmits a global parameter vector of the computational task and a vector of the bias terms for a current iteration round of the iterative learning process to the client entity entities 110a:110K.

S104: The server entity 200 receives per client entity 110k and for the current global iteration round, a local model parameter vector with locally computed computational results, connection weights of the connection matrix, and an updated vector of the bias terms. The locally computed computational results are updates of the machine learning model. The locally computed computational results are computed based on the global parameter vector and the training data as locally available per client entity 110k.

S106: The server entity 200 estimates the class-imbalance in the local training data per each given client entity 110k as a function of the connection weights, the bias terms, a probability distribution being a function of the bias terms as transmitted by the server entity 200, the number of local iteration rounds where all locally available training data was used, and the learning rate. In some embodiments, the class-imbalance is estimated using class-label distribution inference operating on the connection matrix, the bias terms, the probability distribution, the number of samples in the local training data, the number of local training rounds where all locally available training data is used, and the learning rate.

S108: The server entity 200 performs an action for any of the client entity entities 110a:110K for which the class-imbalance is larger than a threshold.

Embodiments relating to further details of estimating class-imbalance in training data of an iterative learning process as performed by the server entity 200 will now be disclosed.

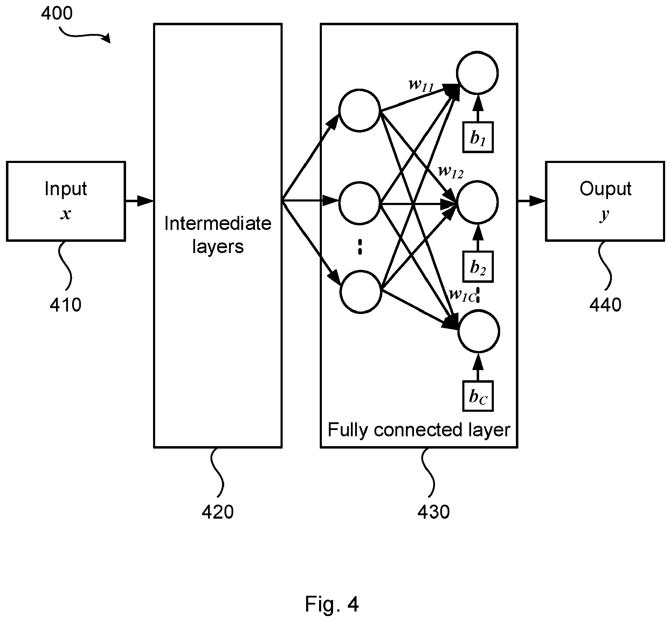

In general terms, there might be some conditions where an exact estimate of the class-imbalance can be calculated. One example of such conditions is defined by the connection weights being initialized to zero, all locally available training data being used for one single local iteration round, and when full-batch updates are made. In particular, in one embodiment, when these conditions all are fulfilled, the class-imbalance is estimated as a difference between the vector of the bias terms as transmitted by the server entity 200 and the updated vector of the bias terms. The difference is weighted by the step-size and offset by the probability distribution as transmitted by the server entity 200. This provides an exact estimate of the class-imbalance. Any appropriate machine learning-approach involving neural networks may be utilized for training the machine learning model, such as deep neural networks (DNNs), and convolutional neural networks (CNNs), etc. Reference is here made to **Fig. 4** which illustrates a generic neural network 400 acting as a classifier. The neural network 400 comprises an input layer 410, one or more intermediate layers 420, a fully-connected output layer 430 and softmax layer before the classification output 440. The weights and biases from the fully-connected output layer 440 are used to estimate the class-label distribution. The parameters pertaining to the last (fully-connected output) layer 430 are sufficient to infer the class-label distribution, under appropriate assumptions on the initialization of the connection weights between the fully-connected layer 430 before the output and the output layer 440. In further detail, denote by $m_L$ the number of neurons in the fully-connected layer before the output. The number of neurons in the output layer is $C$, and thus the connection weight matrix between the fully-connected layer and the output layer for client entity k is a matrix $\mathbf{W}_k \in \mathbb{R}^{m_L \times C}$. Let the bias parameters for each of the $C$ neurons in the output layer be $\mathbf{b}_k \in \mathbb{R}^C$, and denote by $\mathbf{h}_{i,k} \in \mathbb{R}^{m_L}$ the input to the fully-connected layer. Then the output of the fully-connected layer, $\mathbf{z}_i^k \in \mathbb{R}^C$ is a vector

$$\mathbf{z}_i^k \triangleq \mathbf{W}_k^\top \mathbf{h}_{i,k} + \mathbf{b}_k \qquad (6).$$

The softmax activation function, $\boldsymbol{\sigma} \colon \mathbb{R}^C \to \boldsymbol{\Delta}^{C-1}$, defined as

$$[\boldsymbol{\sigma}(\mathbf{z})]_c = \frac{\exp\{[\mathbf{z}]_c\}}{\sum_c \exp\{[\mathbf{z}]_c\}} \qquad (7),$$

is applied to zk to produce the output of the classifier,

$$\mathbf{y}_i^k = \boldsymbol{\sigma}\left(\mathbf{z}_i^k\right) \qquad (8).$$

In what follows the subscript $k$ as the approach is the same for every client entity.

Assume that the loss function used for training is cross entropy and the learning rate is $\eta$. The class labels are one-hot vectors, $\mathbf{e}_i \in [0,1]^C$, there are $C$ neurons in the output and the activation function is softmax like in (7).

Consider that the loss function used for training is the cross entropy, and assume that the learning rate $\eta$ is known. If the number of local epochs $E = 1$, full-batch gradient descent is undertaken, if the weight matrix of the last layer is initialized to $\mathbf{W}^0 = \mathbf{0}$ and the bias vector is initialized as $\mathbf{b}^0$, then the class-label distribution $\hat{\mathbf{p}}$ is

$$\hat{\mathbf{p}} = \mathbf{p} = \frac{1}{N}\sum_i \mathbf{e}_i = \frac{1}{\eta}\varDelta\mathbf{b} + \boldsymbol{\sigma}(\mathbf{b}^0) \qquad (9)$$

where $\varDelta\mathbf{b} = \mathbf{b}^1 - \mathbf{b}^0$ is the bias update at the first iteration ($t = 1$).

Next will be addressed the scenarios where the conditions for exact inference are not satisfied. This will lead to an estimate of the class-label distribution inference when the client entities undertake a generic local update. More specifically, the general conditions are when the weights are not initialized to zero, i.e., $\mathbf{W}^0 \neq \mathbf{0}$, when the client entities do not use full-batch or use stochastic gradient descent with batch size $B < N$ and when the number $E$ of local epochs at an client entity is greater than 1.

Consider a generic local update that is initialized by non-zero global weights $\mathbf{W}^t$ at iteration $t$. Let the batch size $B < N$ and local epochs be $E > 1$. Also, let $j = 1,2, ...J$ index the batch number and $\mathcal{N}_j$ be the set of data samples in batch j. Hence, the total number of mini-batches per epoch is $J \triangleq \lfloor N/B \rfloor$ times where $\lfloor \cdot \rfloor$ is the floor operator. The bias update is then

$$\mathbf{b}_k^{t+1} = \mathbf{b}^t - \frac{\eta}{N_k}\sum_{\ell=1}^{E}\sum_{j=1}^{J}\sum_{i\in\mathcal{N}_j}\boldsymbol{\sigma}\,(\mathbf{z}_i^{k,j,\ell}) + \frac{\eta E}{N_k}\sum_i \mathbf{e}_i, \qquad (10)$$

where

$$\mathbf{z}_i^{k,j,\ell} = (\mathbf{W}_k^{j,\ell})^{\top}\mathbf{h}_i + \mathbf{b}_k^{j,\ell} \qquad (11)$$

$$\mathbf{W}_k^{j=1,\ell=1} \leftarrow \mathbf{W}^t, \quad \mathbf{W}_k^{t+1} = \mathbf{W}_k^{j=J,\ell=E} \qquad (12)$$

$$\mathbf{b}_k^{j=1,\ell=1} \leftarrow \mathbf{b}^t, \quad \mathbf{b}_k^{t+1} = \mathbf{b}_k^{J,E}. \qquad (13)$$

Now, the class-label distribution can be written as

$$\frac{1}{N_k}\sum_i \mathbf{e}_i^k = \frac{(\mathbf{b}_k^{t+1} - \mathbf{b}^t)}{\eta E} + \frac{1}{E}\sum_{\ell=1}^{E}\sum_{j=1}^{J}\sum_{i\in\mathcal{N}_j}\boldsymbol{\sigma}\,(\mathbf{z}_i^{k,j,\ell}) \qquad (14)$$

From (14), it is clear that the server entity has access to 1) initialized parameters (global parameters at iteration t) $\mathbf{W}^t$, $\mathbf{b}^t$ 2) updated parameters $\mathbf{W}_k^{t+1}, \mathbf{b}_k^{t+1}$. Furthermore, if the server entity knows the number of epochs $E$, then the server entity can calculate the first term in (14). The server entity needs to find, however, an approximation for the second term to obtain an estimator for class distribution inference.

Correspondingly there might be some conditions where an exact estimate of the class-imbalance cannot be calculated. Embodiments covering such conditions will be disclosed next.

In particular, in one embodiment, when the connection weights are not initialized to zero, and/or when not all locally available training data was used for one single local iteration round, and/or when not full-batch updates are made, the class-imbalance is estimated as a difference between the vector of the bias terms as transmitted by the server entity 200 and the updated vector of the bias terms. The difference is weighted by the step-size, and the number of local iteration rounds where all locally available training data was used and offset by the probability distribution as transmitted by the server entity 200.

In further detail, according to this embodiment, the second term in (14) is approximated by the softmax output of the initialized bias $\mathbf{b}^t$. In other words,

$$\mathbf{z}_i^{j,\ell} = (\mathbf{W}_k^{j,\ell})^\top \mathbf{h}_i + \mathbf{b}_k^{j,\ell} \approx \mathbf{b}^t \quad \forall i, j, \ell, k \qquad (15)$$

The approximation holds with high accuracy if 1) the product $(\mathbf{W}_k^{j,\ell})^\top \mathbf{h}_i$ is small or close to zero and 2) if the bias is not updated much in subsequent iterations, $\mathbf{b}_k^{j,\ell} \approx \mathbf{b}^t$. The estimator for the class-label distribution of client entity $k$ at global iteration $t$ is then

$$\widehat{\mathbf{p}}_{k,t}^{\text{init}} = \frac{(\mathbf{b}_k^{t+1} - \mathbf{b}^t)}{\eta E} + \sigma(\mathbf{b}^t). \qquad (16)$$

Furthermore, if it is known that the client entity is using all of its dataset to update at every global iteration, another more robust estimator of the class-label distribution is the average over all T observed global iterations,

$$\widehat{\mathbf{p}}_k^{\text{init}} = \frac{1}{T} \sum_{t=1}^{T} \widehat{\mathbf{p}}_{k,t}^{\text{init}}. \qquad (17)$$

To further improve the estimate, the server entity could wait until the approximation holds with better accuracy, i.e., for large values of $t$ (say T), and use $\widehat{\mathbf{p}}_k^{\text{init}} = \widehat{\mathbf{p}}_{k,T}^{\text{init}}$.

In further embodiments, auxiliary data is used when the class-imbalance is estimated. In particular, in one embodiment, when the connection weights are not initialized to zero, and/or when not all locally available training data was used for one single local iteration round, and/or when not full-batch updates are made, the class-imbalance is estimated as a function also of auxiliary data. In some examples, the auxiliary data is a matrix determined from samples of class-labeled training data as available at the server entity 200.

Embodiments in which auxiliary datasets $\mathcal{D}_{\text{aux}}$ containing $N_{\text{aux}}$ samples from each of the $C$ classes will be disclosed next. Auxiliary data that resembles the training data of the client entities could be obtained by the server entity from the public domain or could be generated synthetically. One or more of the client entities could also be colluding with the server entity and offer a small sample of its training data to serve as auxiliary data. This auxiliary data should resemble the training data at the client entities.

One underlying assumption is that the representative samples from a particular class contribute towards the parameter update in the same way irrespective of the client entity or auxiliary data. Therefore, the overall update is postulated to be a linear combination of the updates per class, with the update from each class being proportional to the number of samples in that class. The representative samples from the auxiliary data are used to generate the overall update and the unknown distribution is estimated using a set of linear equations, $Ax = y$, where different examples of the matrix $A$ will be disclosed below. These examples are denoted $\mathbb{I} - \Sigma_{\text{aux}}, \mathbf{B}_{\text{aux}}$, and $\mathbf{W}_{\text{aux}}$. To construct these matrices, the weight and bias changes are recorded for samples per class and used as examples to relate the change in parameter values to the proportion of training data samples in each class.

In some aspects, a matrix $\Sigma_{\text{aux}}$ (where there are as many columns as number of classes) is utilized. Each column in $\Sigma_{\text{aux}}$ is the average soft-label over $E$ epochs computed using auxiliary data samples for that class. Here, the soft-label pertaining to a certain input is a vector whose entries indicate the probability of the input belonging to a class. The average soft-label over $E$ epochs for a class can then be obtained by mimicking the training process of a given client entity whilst feeding samples of class-labeled training data from a single class at a time. In particular, in one embodiment, the class-imbalance is estimated as a difference between the vector of the bias terms as transmitted by the server entity 200 and the updated vector of the bias terms, wherein the difference is weighted by the step-size, the number of local iteration rounds where all locally available training data was used, and an inverse of the matrix $\mathbb{I} - \Sigma_{\text{aux}}$, where $\mathbb{I}$ is the identity matrix of same dimension as $\Sigma_{\text{aux}}$.

In further detail, according to the present embodiment, the second term in (14) is approximated using an auxiliary dataset for every class c, $\mathcal{D}^c_{\text{aux}} \triangleq \{\mathbf{x}^c_i, \mathbf{e}^c_i\}_{i=1,\ldots,N_{\text{aux}}}$, which contains $N_{\text{aux}}$ samples from class c to compute the output of the client entity for every epoch $\ell$. At epoch -e, assume that

$$\sum_{j=1}^{J} \sum_{i \in \mathcal{N}_j} \boldsymbol{\sigma}(\mathbf{z}^{k,j,\ell}_i) \approx \sum_{c=1}^{C} [\mathbf{p}]_c \boldsymbol{\sigma}(\mathbf{z}^{\ell}_{c,\text{aux}}), \qquad (18)$$

where $\boldsymbol{\sigma}(\mathbf{z}^{\ell}_{c,\text{aux}})$ is the average softmax output for auxiliary data belonging to class c when fed singly to update the model parameters at epoch $\ell$ i.e.,

$$\boldsymbol{\sigma}(\mathbf{z}^{\ell}_{c,\text{aux}}) = \frac{1}{N_{\text{aux}}} \sum_{i=1}^{N_{\text{aux}}} \boldsymbol{\sigma}((\mathbf{W}^{\ell}_{\text{aux},c})^{\top} \mathbf{h}^c_i + \mathbf{b}^{\ell}_{\text{aux},c}) \qquad (19)$$

$$\mathbf{W}^{\ell+1}_{\text{aux},c} \leftarrow \mathbf{W}^{\ell}_{\text{aux},c} - \eta \nabla_{\mathbf{W}^{\ell}_{\text{aux},c}} \mathcal{L}_{c,\text{aux}}(\boldsymbol{\theta}_t) \qquad (20)$$

$$\mathcal{L}_{c,\text{aux}}(\boldsymbol{\theta}_t) = -\frac{1}{N_{\text{aux}}} \sum_{i=1}^{N_{\text{aux}}} [\mathbf{e}^c_i]_c \log([\mathbf{f}(\mathbf{x}^c_i; \boldsymbol{\theta}_t)]_c). \qquad (21)$$

Therefore, the approximation considered is

$$\frac{1}{E} \sum_{\ell=1}^{E} \sum_{j=1}^{J} \sum_{i \in N_j} \sigma(z^{k,j,\ell}_i) \approx \frac{1}{E} \sum_{c=1}^{C} [p]_c \sum_{\ell=1}^{E} \sigma(z^{\ell}_{c,aux}). \qquad (22)$$

Let $\boldsymbol{\sigma}(\mathbf{z}_{c,\text{aux}}) \triangleq \frac{1}{E} \sum_{\ell=1}^{E} \boldsymbol{\sigma}(\mathbf{z}^{\ell}_{c,\text{aux}})$. Then, (14) can be rewritten as

$$\mathbf{p}_k \approx \frac{(\mathbf{b}_k^{t+1} - \mathbf{b}^t)}{\eta E} + \sum_{c=1}^{C} [\mathbf{p}_k]_c \sigma(\mathbf{z}_{c,\text{aux}}) \qquad (23)$$

$$(\mathbb{I} - \mathbf{\Sigma}_{\text{aux}})\mathbf{p}_k \approx \frac{(\mathbf{b}_k^{t+1} - \mathbf{b}^t)}{\eta E}, \qquad (24)$$

where $\mathbf{\Sigma}_{\text{aux}} \triangleq [\sigma(\mathbf{z}_{1,\text{aux}}) \quad \sigma(\mathbf{z}_{2,\text{aux}}) \quad \dots \quad \sigma(\mathbf{z}_{C,\text{aux}})]$. Thus, the following estimator is proposed

$$\hat{\mathbf{p}}_{k,t}^{\text{soft-label}} = \frac{1}{\eta E}(\mathbb{I} - \mathbf{\Sigma}_{\text{aux}})^{-1}(\mathbf{b}_k^{t+1} - \mathbf{b}^t). \qquad (25)$$

If the matrix $(\mathbb{I} - \mathbf{\Sigma}_{\text{aux}})$ is not invertible, then a low-rank approximation of the matrix obtained via singular-value decomposition can be used.

In some aspects, a matrix $\mathbf{B}_{\text{aux}}$ where each column in $\mathbf{B}_{\text{aux}}$ consists of a respective gradient-per-class is utilized. Each gradient-per-class is computed by feeding samples of class-labeled training data from a single class at a time and noting the difference between the initial bias and the updated bias using data from that class. In particular, in one embodiment, the class-imbalance is estimated as a difference between the vector of the bias terms as transmitted by the server entity 200 and the updated vector of the bias terms, wherein the difference is weighted by an inverse of the matrix.

In further detail, according to the present embodiment, the same type of auxiliary dataset per class, $\mathcal{D}_{\text{aux}}^c$ as in the previous embodiment is used. But instead of approximating the softmax output, the auxiliary dataset is used to compute an approximation of the sum of gradients in local epochs per client entity. It is assumed that the sum of gradients that contribute to change in the bias are composed of proportional changes in bias when the machine learning model is updated singly with data from class c. More specifically, the bias update is approximated as

$$\frac{(\mathbf{b}_k^{t+1} - \mathbf{b}^t)}{\eta E} \approx \sum_{c=1}^{C} [\mathbf{p}]_c \nabla_{\mathbf{b}_{\text{aux}}} \mathcal{L}_{c,\text{aux}}(\mathbf{\theta}_t). \qquad (26)$$

Furthermore, the gradient $\nabla_{\mathbf{b}_{\text{aux}}} \mathcal{L}_{c,\text{aux}}(\mathbf{\theta}_t)$ is approximated using the bias updates when auxiliary data from class c is used to update the model parameters,

$$\nabla_{\mathbf{b}_{\text{aux}}} \mathcal{L}_{c,\text{aux}}(\mathbf{\theta}_t) \approx \frac{\mathbf{b}_{\text{aux},c}^E - \mathbf{b}^t}{\eta E}, \qquad (27)$$

where $\mathbf{b}_{\text{aux},c}^E$ is the bias obtained by updating the model E epochs initialized at $\theta_t$. The bias update for each epoch is similar to (20). This leads to the estimator

$$\hat{\mathbf{p}}_{k,t}^{\text{grad}} = \mathbf{B}_{\text{aux}}^{-1}(\mathbf{b}_k^{t+1} - \mathbf{b}^t), \qquad (28)$$

where

$$\mathbf{B}_{\text{aux}} = \begin{bmatrix} \mathbf{b}_{\text{aux},1}^{E} - \mathbf{b}^{t} & \mathbf{b}_{\text{aux},2}^{E} - \mathbf{b}^{t} & \cdots & \mathbf{b}_{\text{aux},C}^{E} - \mathbf{b}^{t} \end{bmatrix}. \qquad (29)$$

When E = 1, $B = N_k$, the weight matrix of the last layer is initialized to $\mathbf{W}^0 = \mathbf{0}$ and the bias vector is initialized as $\mathbf{b}^0$, then the estimators at iteration t = 1, $\hat{\mathbf{p}}_{k,1}^{\text{init}}, \hat{\mathbf{p}}_{k,1}^{\text{soft-label}} \hat{\mathbf{p}}_{k,1}^{\text{grad}}$ are exact, i.e., $\hat{\mathbf{p}}_{k,1}^{\text{init}} = \hat{\mathbf{p}}_{k,1}^{\text{soft-label}} = \hat{\mathbf{p}}_{k,1}^{\text{grad}} = \mathbf{p}$. That is

$$\hat{\mathbf{p}}_{k,1}^{\text{init}} = \hat{\mathbf{p}}_{k,1}^{\text{soft-label}} = \hat{\mathbf{p}}_{k,1}^{\text{grad}} = \frac{1}{\eta}(\mathbf{b}_k^1 - \mathbf{b}^0) + \sigma(\mathbf{b}^0) = \mathbf{p} \qquad (30)$$

In some aspects, the auxiliary data is used to compute the gradient with respect to one connection weight matrix per class by noting the difference between the initial and the updated weight matrix after feeding samples of class-labeled training data from a single class. Each column of a matrix $\mathbf{W}_{\text{aux}}$ consists of the gradient-per-class of the connection weight matrix where either rows or columns of the weight matrix are concatenated to provide more than C linear equations. In particular, in one embodiment, the class-imbalance is estimated as a difference between a vector of connection weights as updated during the current global iteration and a vector of the connection weights as initialized, wherein the difference is weighted by an inverse of the matrix.

In further detail, according to the present embodiment, the assumption is made that the sum of gradients pertaining to the weight matrix in the last layer that contribute to change in the weight matrix of the last layer are composed of proportional changes in weight matrix when the model is updated singly with data from class c. As for the previously described embodiments, the same type of auxiliary dataset per class, $\mathcal{D}_{\text{aux}}^c$ is used. The following approximation is made.

$$\frac{1}{\eta E}(\mathbf{W}_k^{t+1} - \mathbf{W}^t) \approx \sum_{c=1}^{C} [\mathbf{p}]_c \nabla_{\mathbf{W}_{\text{aux}}} \mathcal{L}_{c,\text{aux}}(\boldsymbol{\theta}_t).$$

Thus, the following estimator is proposed

$$\hat{\mathbf{p}}_{k,t}^{\text{wt-grad}} = \mathbf{W}_{\text{aux}}^{-1} \text{vec}(\mathbf{W}_k^{t+1} - \mathbf{W}^t)$$

$$\mathbf{W}_{\text{aux}} = \begin{bmatrix} \text{vec}(\mathbf{W}_{\text{aux},1}^E - \mathbf{W}^t) & \cdots & \text{vec}(\mathbf{W}_{\text{aux},C}^E - \mathbf{W}^t) \end{bmatrix}.$$

The proposed estimators for the last three embodiments are not guaranteed to produce an estimate that lies in the probability simplex $\Delta^{C-1}$. Therefore, the server entity might add a step of projecting the obtained estimate onto the probability simplex,

$$\hat{\mathbf{p}} \leftarrow \arg\min_{\mathbf{p} \in \Delta^{C-1}} \| \mathbf{p} - \hat{\mathbf{p}} \|_2^2$$

As disclosed above, server entity 200 in step S108 performs an action for any of the client entity entities 110a:110K for which the class-imbalance is larger than a threshold. There could be different examples of such actions. Examples of actions for any of the client entity entities 110a:110K for which the class-imbalance is larger than a threshold will be disclosed next. One action involves the provision of information. In particular, in some examples, the action pertains to informing the client entity entities that the training data locally available to these client entity entities is class-imbalanced. One action involves the provision of adjustment factors. In particular, in some examples, the action pertains to providing the client entity entities with adjustment factors to re-balance the training data locally available to the client entity entities. One action involves exclusion of client entity entities from the iterative learning process. In particular, in some examples, the action pertains to excluding the client entity entities from participating in a future iteration round of the iterative learning process.

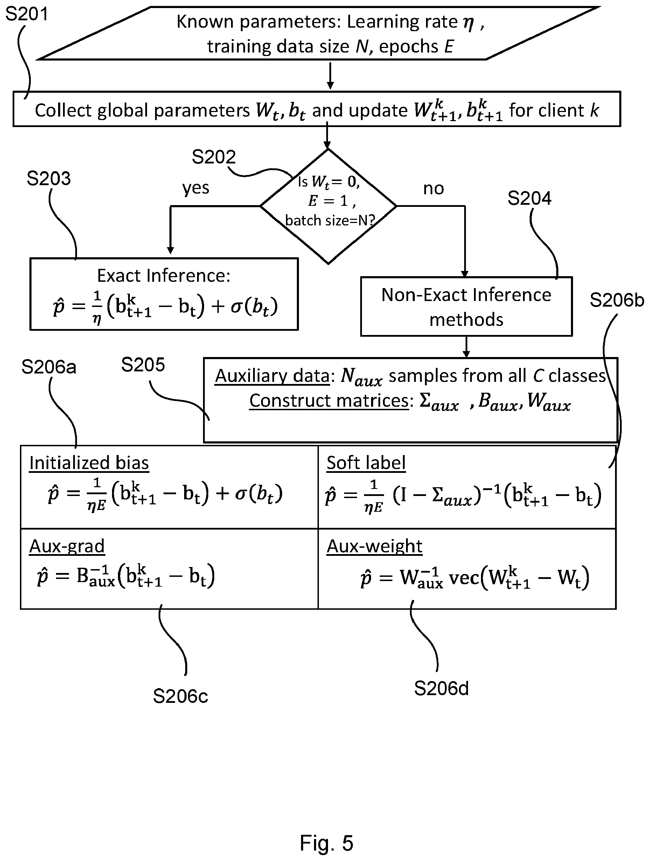

One particular embodiment for estimating class-imbalance in training data of an iterative learning process as performed by the server entity 200 will be disclosed next with reference to the flowchart of **Fig. 5**. Since the server entity is the orchestrator, the learning of classifier parameters starts with the server entity making an initial guess of parameters. The parameters needed for the class-label distribution inference are the connection weight matrix between the fully-connected layer and the output layer for client entity , i.e., the matrix $\mathbf{W}_k \in \mathbb{R}^{m_L \times C}$, and the bias parameters for each of the C neurons in the output layer $\mathbf{b}_k \in \mathbb{R}^C$. The server entity sends these parameters to the client entities to start their local training process.

Each client entity $k$ updates the parameters by executing the local training process using its local (private) training data. To update the parameters, a client entity needs to know the learning rate $\eta$ (also called the step-size) and the number of epochs $E$, which refers to the number of local iterations of updates to perform. At every local iteration, the parameters are updated by a value proportional to the learning rate $\eta$ and this process is repeated $E$ number of times. At the end of this local training process client entity $k$ sends to the server entity its updated parameters $\mathbf{W}_k^{t+1}, \mathbf{b}_k^{t+1}$ to the server entity.

S201: To determine the class-label distribution of a client entity $k$, the server entity runs an inference algorithm. The inputs to the inference algorithm are the initial classifier parameters $\mathbf{W}_k^t, \mathbf{b}_k^t$, the updated parameter values $\mathbf{W}_k^{t+1}, \mathbf{b}_k^{t+1}$, the learning learning rate $\eta$, and the number of epochs $E$.

S202: The server entity checks whether the initial parameter set by the server entity is $\mathbf{W}_k^t = 0$ and the number of epochs $E=1$ and if all the training samples were used to update the parameter. If the conditions are fulfilled, step S203 is entered. It at least one condition is not fulfilled, step S204 is entered.

S203: The server entity proceeds with the calculation of the exact class-label distribution.

S204: The server entity uses one of the proposed approximators to estimate the class-label distribution. Thus, one of steps S206a, S206b, S206c, and S206d is entered.

S205: Before any of steps S206b, S206c, or S206d is entered, auxiliary data is collected and a respective matrix (as used in each of steps S206b, S206c, or S206d) is calculated.

S206a: The server entity estimates the class-label distribution in the same way as for the exact class-label distribution but where the difference between initial and updated parameters are scaled further by the number of epochs $E$.

S206b: The server entity estimates the class-label distribution based on the matrix $\Sigma_{aux}$ as disclosed above.

S206c: The server entity estimates the class-label distribution based on the matrix $\mathbf{B}_{aux}$ as disclosed above.

S206d: The server entity estimates the class-label distribution based on the matrix $\mathbf{W}_{aux}$ as disclosed above.

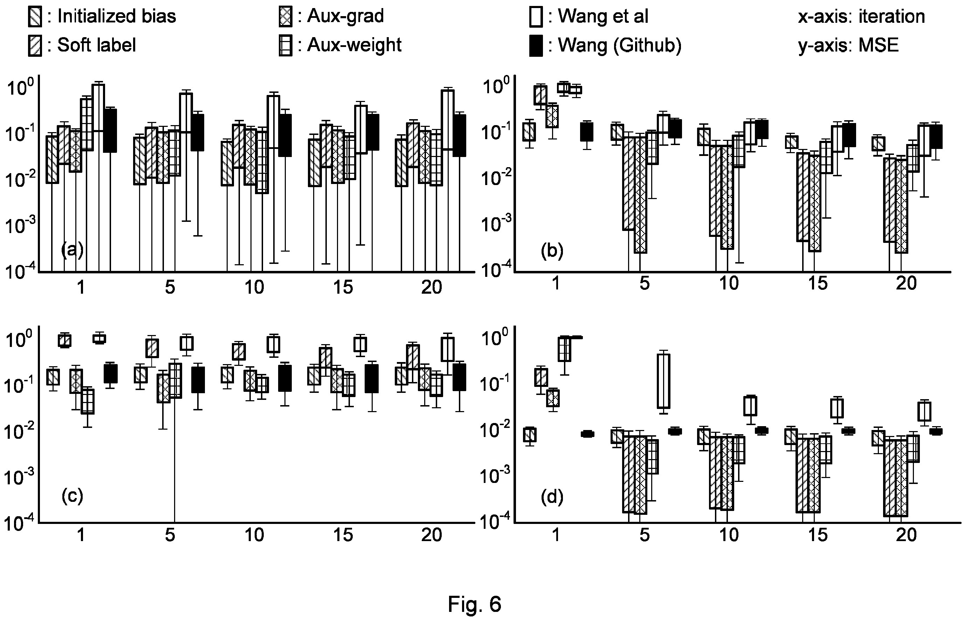

**Fig. 6** shows simulation results in terms of boxplots for the non-exact inference methods (denoted "Initialized bias" where the server entity estimates the class-label distribution as in step S206a, "Soft label" where the server entity estimates the class-label distribution as in step S206b, "Aux-grad" where the server entity estimates the class-label distribution as in step S206c, and "Aux-grad" where the server entity estimates the class-label distribution as in step S206d) on four publicly available datasets ((a): US census income, (b): CIFAR-10, (c): MNIST, and (d): CIFAR-100) as compared to two examples of the state-of-the-art, as represented by the aforementioned document by Wang, Lixu, et al. (denoted "Wang et al") and Wang entitled "Addressing Class Imbalance in Federated Learning" as per 10 October 2022 available here: https://github.com/balanced-fl/ Addressing-Class- Imbalance- FL (denoted "Wang (Github)"). The boxplot of the mean squared error (MSE) is shown for each of the estimators at global iterations $t \in \{1,5,10,15,20\}$. It is shown that the median of the distribution of the MSE decreases with the global iterations. The variance of the MSE is higher for the proposed methods that use an auxiliary dataset. This is to be expected due to the diversity of the auxiliary dataset. It can also be observed that the median of the distributions for the proposed methods is much lower than that for the state-of-the-art.

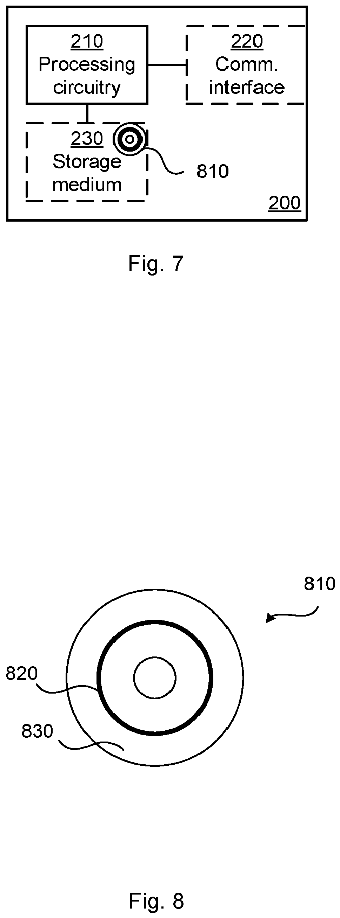

**Fig. 7** schematically illustrates, in terms of a number of functional units, the components of a server entity 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 810 (as in Fig. 8), e.g. in the form of a storage medium 230.

13

The processing circuitry 210 may further be provided as at least one application specific integrated circuit (ASIC), or field programmable gate array (FPGA).

Particularly, the processing circuitry 210 is configured to cause the server entity 200 to perform a set of operations, or steps, as disclosed above. For example, the storage medium 230 may store the set of operations, and the processing circuitry 210 may be configured to retrieve the set of operations from the storage medium 230 to cause the server entity 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The server entity 200 may further comprise a communications interface 220 at least configured for communications with the cliente entities 110a:110K. As such the communications interface 220 may comprise one or more transmitters and receivers, comprising analogue and digital components. The processing circuitry 210 controls the general operation of the server entity 200 e.g. by sending data and control signals to the communications interface 220 and the storage medium 230, by receiving data and reports from the communications interface 220, and by retrieving data and instructions from the storage medium 230. Other components, as well as the related functionality, of the server entity 200 are omitted in order not to obscure the concepts presented herein.

The server entity 200 may be provided as a standalone device or as a part of at least one further device. For example, the server entity 200 may be provided in a network node. Alternatively, functionality of the server entity 200 may be distributed between at least two devices, or nodes. These at least two nodes, or devices, may either be part of the same network part or may be spread between at least two such network parts. Thus, a first portion of the instructions performed by the server entity 200 may be executed in a first device, and a second portion of the of the instructions performed by the server entity 200 may be executed in a second device; the herein disclosed embodiments are not limited to any particular number of devices on which the instructions performed by the server entity 200 may be executed. Hence, the methods according to the herein disclosed embodiments are suitable to be performed by a server entity 200 residing in a cloud computational environment. Therefore, although a single processing circuitry 210 is illustrated in Fig. 7 the processing circuitry 210 may be distributed among a plurality of devices, or nodes. The same applies to the computer program 820 of Fig. 8.

**Fig. 8** shows one example of a computer program product 810 comprising computer readable storage medium 830. On this computer readable storage medium 830, a computer program 820 can be stored, which computer program 820 can cause the processing circuitry 210 and thereto operatively coupled entities and devices, such as the communications interface 220 and the storage medium 230, to execute methods according to embodiments described herein. The computer program 820 and/or computer program product 810 may thus provide means for performing any steps as herein disclosed.

In the example of Fig. 8, the computer program product 810 is illustrated as an optical disc, such as a CD (compact disc) or a DVD (digital versatile disc) or a Blu-Ray disc. The computer program product 810 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 820 is here schematically shown as a track on the depicted optical disk, the computer program 820 can be stored in any way which is suitable for the computer program product 810.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for estimating class-imbalance in training data of an iterative learning process, wherein the method is performed by a server entity (200),

   wherein the iterative learning process pertains to a computational task to be performed by client entities (110a:110K), the computational task involving the client entities (110a:110K) to participate in training a machine learning model,
   wherein the machine learning model per each global iteration round is trained during a number of local iteration rounds at a learning rate and using a neural network (400) having a fully-connected output layer (430) that is associated with a connection matrix and bias terms, and
   wherein the method comprises:

transmitting (S102) a global parameter vector of the computational task and a vector of the bias terms for a current iteration round of the iterative learning process to the client entities (110a:110K);

receiving (S104), per client entity (110k) and for the current global iteration round, a local model parameter vector with locally computed computational results, connection weights of the connection matrix, and an updated vector of the bias terms, wherein the locally computed computational results are updates of the machine learning model and are computed based on the global parameter vector and the training data as locally available per said client entity (110k);

estimating (S106) the class-imbalance in the local training data per each given client entity (110k) as a function of the connection weights, the bias terms, a probability distribution being a function of the bias terms as transmitted by the server entity (200), the number of local iteration rounds where all locally available training data was used, and the learning rate; and

performing (S108) an action for any of the client entities (110a:110K) for which the class-imbalance is larger than a threshold.

2. The method according to claim 1, wherein the class-imbalance is estimated using class-label distribution inference operating on the connection matrix, the bias terms, the probability distribution, the number of samples in the local training data, the number of local training rounds where all locally available training data is used, and the learning rate.

3. The method according to claim 1 or 2, wherein, when the connection weights are initialized to zero, when all locally available training data was used for one single local iteration round, and when full-batch updates are made, the class-imbalance is estimated as a difference between the vector of the bias terms as transmitted by the server entity (200) and the updated vector of the bias terms, wherein the difference is weighted by the step-size and offset by the probability distribution as transmitted by the server entity (200).

4. The method according to any preceding claim, wherein, when the connection weights are not initialized to zero, and/or when not all locally available training data was used for one single local iteration round, and/or when not full-batch updates are made, the class-imbalance is estimated as a difference between the vector of the bias terms as transmitted by the server entity (200) and the updated vector of the bias terms, wherein the difference is weighted by the step-size, and the number of local iteration rounds where all locally available training data was used and offset by the probability distribution as transmitted by the server entity (200).

5. The method according to claim 1 or 2, wherein, when the connection weights are not initialized to zero, and/or when not all locally available training data was used for one single local iteration round, and/or when not full-batch updates are made, the class-imbalance is estimated as a function also of auxiliary data.

6. The method according to claim 5, wherein the auxiliary data is a matrix determined from samples of class-labeled training data as available at the server entity (200).

7. The method according to claim 6, wherein the class-imbalance is estimated as a difference between the vector of the bias terms as transmitted by the server entity (200) and the updated vector of the bias terms, wherein the difference is weighted by the step-size, the number of local iteration rounds where all locally available training data was used, and an inverse of the matrix.

8. The method according to claim 6, wherein the class-imbalance is estimated as a difference between the vector of the bias terms as transmitted by the server entity (200) and the updated vector of the bias terms, wherein the difference is weighted by an inverse of the matrix.

9. The method according to claim 6, wherein the class-imbalance is estimated as a difference between a vector of connection weights as updated during the current global iteration and a vector of the connection weights as initialized, wherein the difference is weighted by an inverse of the matrix.

10. The method according to any preceding claim, wherein the action pertains to any of:

- informing said any of the client entities (110a:110K) that the training data locally available to said any of the client entities (110a:110K) is class-imbalanced,
- providing said any of the client entities (110a:110K) with adjustment factors to re-balance the training data locally available to said any of the client entities (110a:110K),
- excluding said any of the client entities (110a:110K) from participating in a future iteration round of the iterative learning process.

11. The method according to any preceding claim, wherein the server entity (200) and the client entities (110a:110K) are provided in a distributed computing architecture.

12. The method according to any preceding claim, wherein each of the client entities (110a:110K) is provided in a respective tightening tool.

13. The method according to claim 12, wherein the computational task pertains to analyzing a clamp force applied by the tightening tool to a fastener for tightening a joint.

14. A server entity (200) for estimating class-imbalance in training data of an iterative learning process, wherein the iterative learning process pertains to a computational task to be performed by client entities (110a:110K), the computational task involving the client entities (110a:110K) to participate in training a machine learning model, wherein the machine learning model per each global iteration round is trained during a number of local iteration rounds at a learning rate and using a neural network (400) having a fully-connected output layer (430) that is associated with a connection matrix and bias terms, the server entity (200) comprising processing circuitry (210), the processing circuitry being configured to cause the server entity (200) to:

transmit a global parameter vector of the computational task and a vector of the bias terms for a current iteration round of the iterative learning process to the client entities (110a:110K);
receive, per client entity (110k) and for the current global iteration round, a local model parameter vector with locally computed computational results, connection weights of the connection matrix, and an updated vector of the bias terms, wherein the locally computed computational results are updates of the machine learning model and are computed based on the global parameter vector and the training data as locally available per said client entity (110k);
estimate the class-imbalance in the local training data per each given client entity (110k) as a function of the connection weights, the bias terms, a probability distribution being a function of the bias terms as transmitted by the server entity (200), the number of local iteration rounds where all locally available training data was used, and the learning rate; and
perform an action for any of the client entities (110a: 110K) for which the class-imbalance is larger than a threshold.

15. A computer program (820) for estimating class-imbalance in training data of an iterative learning process, wherein the iterative learning process pertains to a computational task to be performed by client entities (110a:110K), the computational task involving the client entities (110a:110K) to participate in training a machine learning model, wherein the machine learning model per each global iteration round is trained during a number of local iteration rounds at a learning rate and using a neural network (400) having a fully-connected output layer (430) that is associated with a connection matrix and bias terms, the computer program comprising computer code which, when run on processing circuitry (210) of a server entity (200), causes the server entity (200) to:

transmit (S102) a global parameter vector of the computational task and a vector of the bias terms for a current iteration round of the iterative learning process to the client entities (110a:110K);
receive (S104), per client entity (110k) and for the current global iteration round, a local model parameter vector with locally computed computational results, connection weights of the connection matrix, and an updated vector of the bias terms, wherein the locally computed computational results are updates of the machine learning model and are computed based on the global parameter vector and the training data as locally available per said client entity (110k);
estimate (S106) the class-imbalance in the local training data per each given client entity (110k) as a function of the connection weights, the bias terms, a probability distribution being a function of the bias terms as transmitted by the server entity (200), the number of local iteration rounds where all locally available training data was used, and the learning rate; and
perform (S108) an action for any of the client entities (110a:110K) for which the class-imbalance is larger than a threshold.

Fig. 1

Fig. 2

```
┌─────────────────────────────────────────┐
│              S102                        │
│   Transmit global parameter vector       │
└─────────────────────────────────────────┘
                    │
                    ▼
┌─────────────────────────────────────────┐
│              S104                        │
│  Receive local model parameter vectors   │
│            and parameters                │
└─────────────────────────────────────────┘
                    │
                    ▼
┌─────────────────────────────────────────┐
│              S106                        │
│      Estimate class-imbalance            │
└─────────────────────────────────────────┘
                    │
                    ▼
┌─────────────────────────────────────────┐
│              S108                        │
│    Perform action for client entity      │
└─────────────────────────────────────────┘
```

Fig. 3

Fig. 4

S201

Known parameters: Learning rate $\eta$ ,
training data size $N$, epochs $E$

Collect global parameters $W_t, b_t$ and update $W_{t+1}^k, b_{t+1}^k$ for client $k$

S202

Is $W_t = 0$,
$E = 1$,
batch size=N?

S203

yes

no

S204

Exact Inference:
$$\hat{p} = \frac{1}{\eta}\left(b_{t+1}^k - b_t\right) + \sigma(b_t)$$

Non-Exact Inference
methods

S206b

S206a  S205

Auxiliary data: $N_{aux}$ samples from all $C$ classes
Construct matrices: $\Sigma_{aux}$ , $B_{aux}, W_{aux}$

| Initialized bias $$\hat{p} = \frac{1}{\eta E}\left(b_{t+1}^k - b_t\right) + \sigma(b_t)$$ | Soft label $$\hat{p} = \frac{1}{\eta E}\left(I - \Sigma_{aux}\right)^{-1}\left(b_{t+1}^k - b_t\right)$$ |
| --- | --- |
| Aux-grad $$\hat{p} = B_{aux}^{-1}\left(b_{t+1}^k - b_t\right)$$ | Aux-weight $$\hat{p} = W_{aux}^{-1}\, vec\left(W_{t+1}^k - W_t\right)$$ |

S206c

S206d

Fig. 5

Fig. 6

Fig. 7

Fig. 8

Europäisches
Patentamt

European
Patent Office

Office européen
des brevets

# EUROPEAN SEARCH REPORT

**Application Number**

EP 23 19 7061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Makhija Disha ET AL: "Architecture Agnostic Federated Learning for Neural Networks", arXiv (Cornell University), 7 July 2022 (2022-07-07), XP093136475, Ithaca DOI: 10.48550/arxiv.2202.07757 Retrieved from the Internet: URL:https://arxiv.org/pdf/2202.07757.pdf [retrieved on 2024-02-29] * abstract; figure 2 * * 1. Introduction * * 3. FedHeNN Methodology * * 4. Experiments * | 1-15 | INV. G06N3/084 G06N3/098 B25B13/00 G06N3/045 |
| T | Ramakrishna Raksha ET AL: "Inferring Class Label Distribution of Training Data from Classifiers: An Accuracy-Augmented Meta-Classifier Attack", arXiv (Cornell University), 8 November 2022 (2022-11-08), XP093136482, Ithaca DOI: 10.48550/arxiv.2211.04157 Retrieved from the Internet: URL:https://arxiv.org/pdf/2211.04157.pdf [retrieved on 2024-02-29] * abstract * | | |
| A | YANG MIAO ET AL: "Federated Learning with Class Imbalance Reduction", 2021 29TH EUROPEAN SIGNAL PROCESSING CONFERENCE (EUSIPCO), EURASIP, 23 August 2021 (2021-08-23), pages 2174-2178, XP034038462, DOI: 10.23919/EUSIPCO54536.2021.9616052 [retrieved on 2021-11-15] * the whole document * | 1,14,15 | |

TECHNICAL FIELDS SEARCHED (IPC)

G06N
B25B

-/--

The present search report has been drawn up for all claims

| Place of search | Date of completion of the search | Examiner |
|---|---|---|
| The Hague | 29 February 2024 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FERRAGUIG LYNDA ET AL: "Survey of Bias Mitigation in Federated Learning", , 15 September 2021 (2021-09-15), XP093136485, Retrieved from the Internet: URL:https://hal.science/hal-03343288/document> * 3. Comparison Criteria of Bias Mitigation in Federated Learning * * 4. Existing Works on Bias Mitigation in Federated Learning * ----- | 1,14,15 | |

TECHNICAL FIELDS
SEARCHED      (IPC)

The present search report has been drawn up for all claims

| Place of search | Date of completion of the search | Examiner |
|---|---|---|
| The Hague | 29 February 2024 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG, LIXU et al.** Addressing Class Imbalance in Federated Learning. *Proceedings of the AAAI Conference on Artificial Intelligence,* 2021, vol. 35 (11

- **WANG.** *Addressing Class Imbalance in Federated Learning,* 10 October 2022, https://github.com/balanced-fl